Europäisches Patentamt

**European Patent Office**

Office européen des brevets

(19)

(11) **EP 1 304 933 B1**

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(21) Anmeldenummer: 01971767.7

(22) Anmeldetag: **18.07.2001**

(51) Int Cl.$^7$: **A24C 5/34**, G01N 22/02

(86) Internationale Anmeldenummer:
**PCT/EP2001/008313**

(87) Internationale Veröffentlichungsnummer:
**WO 2002/009539 (07.02.2002 Gazette 2002/06)**

(54) **VERFAHREN UND VORRICHTUNG ZUM DETEKTIEREN UND SELEKTIEREN VON FREMDKÖRPERN IN CIGARETTEN**

METHOD AND DEVICE FOR DETECTING FOREIGN BODIES IN CIGARETTES

PROCEDE ET DISPOSITIF POUR LA DETECTION ET LA SELECTION DE CORPS ETRANGERS DANS DES CIGARETTES

(84) Benannte Vertragsstaaten:
**AT BE CH CY DE DK ES FI FR GB GR IE IT LI LU MC NL PT SE TR**
Benannte Erstreckungsstaaten:
**RO SI**

(30) Priorität: **31.07.2000 DE 10037180**

(43) Veröffentlichungstag der Anmeldung:
**02.05.2003 Patentblatt 2003/18**

(73) Patentinhaber: **Reemtsma Cigarettenfabriken GmbH**
**22761 Hamburg (DE)**

(72) Erfinder:
• **DEMMER, Udo**
**25421 Pinneberg (DE)**
• **HAUSEN, Volker**
**22605 Hamburg (DE)**

(74) Vertreter: **UEXKÜLL & STOLBERG**
**Patentanwälte**
**Beselerstrasse 4**
**22607 Hamburg (DE)**

(56) Entgegenhaltungen:
**EP-A- 0 889 321    EP-A- 0 902 277**
**DE-A- 3 905 658    DE-A- 19 705 260**
**US-A- 4 707 652    US-A- 5 476 108**
**US-A- 5 736 864**

EP 1 304 933 B1

## Beschreibung

Die Erfindung betrifft ein Verfahren zum Detektieren und Selektieren von Fremdkörpern in Cigaretten, bei dem der Tabak im Bereich der Cigarettenmaschine einer Mikrowellenstrahlung ausgesetzt und sowohl ein die Dichte des Tabaks betreffendes Signal $S_D$ als auch ein die Feuchte des Tabaks betreffendes Signal $S_F$ erzeugt werden.

Aus der **DE 197 05 260 A1** sind ein Verfahren und eine Anordnung zum Erfassen mindestens einer Eigenschaft eines Stoffes, wie etwa der Feucht- und/oder Trockenmasse von Tabak, durch Auswertung der durch die Anwesenheit des Stoffes verursachten Verstimmung eines Mikrowellenresonators bekannt, wobei dem Resonator Mikrowellen mit mindestens zwei unterschiedlichen Frequenzen zugeführt und die Resonanzfrequenzverschiebung und die Dämpfung im Vergleich zur vom Stoff unbeeinflussten Resonanzkurve analysiert werden.

Die **EP 0 889 321 A1** offenbart einen Mikrowellenresonator zur Messung des Dichte- und/oder Feuchteprofils in Längsrichtung einer Probe mit hoher Genauigkeit und Ortsauflösung, wobei der Resonator mit einem Dielektrikum gefüllt und der Innenraum eine wesentlich kleinere Dicke als die dazu senkrechten Querabmessungen aufweist.

In der Tabakindustrie ist es zur Erhaltung der Produktqualität eine notwendige Aufgabe, im Rohtabak enthaltene Fremdkörper zu detektieren und zu entfernen. Dabei ist unter Fremdkörper jedes tabakfremde Material zu verstehen.

Die **US 4,707,652** offenbart ein Verfahren zum Erkennen von Fremdkörpern in Cigarettentabak durch Anwendung von elektromagnetischer Streustrahlung, die analysiert wird.

Ferner befasst sich die **US 5,476,108** ebenfalls mit dem Erkennen von Fremdkörpern in Cigarettentabak, wobei der Tabak mit einer Strahlung aus dem nahen Infrarot untersucht wird. Wird ein Fremdkörper erkannt, so wird ein Signal für einen Ejektor erzeugt, der eine Druckluftdüse aufweist, die daraufhin einen Druckluftstrom gegen die den Fremdkörper enthaltende Cigarette richtet, um sie aus dem Produktionsprozess auszuschleusen.

Aus **DE 297 19 600 U1** ist schließlich eine Vorrichtung zur Erkennung von Inhomogenitäten und Fremdkörpern in einer Materialschicht bekannt, wobei die Materialschicht mit Teilchen- oder elektromagnetischer Strahlung beaufschlagt und die transmittierte oder rückgestreute Intensität analysiert wird.

Diese Methoden, in der Cigarettenmaschine Fremdkörper zu detektieren und zu entfernen sind nur eingeschränkt tauglich und haben dementsprechend bezogen auf alle denkbar vorkommenden Fremdkörper einen unzureichenden Wirkungsgrad.

Beim Stand der Technik kommen neben reinen Metallsuchgeräten oder Sieb- bzw. Windsichtverfahren insbesondere optische Bildauswerteverfahren im Bereich der Tabakaufbereitung zum Einsatz.

Die Nachteile dieser Technik und dieses Vorgehens sind:

- Die Wirkungsweise solcher Anlagen basiert auf der optischen Erkennung von Fremdkörpern. Dementsprechend muss der Tabakmassenstrom zu einer Monolage verdünnt werden, welches nur durch hohen Aufwand an Kosten, Apparatur und Platz realisiert werden kann.
- Die Detektionsraten sind materialspezifisch und insbesondere stark abhängig von der Farbe und der Größe der Fremdkörper. Kleine Fremdkörper, die eine ähnliche Farbe wie Tabak haben sind praktisch nicht detektierbar.
- Neben dem tatsächlichen Fremdkörper wird methodisch bedingt immer auch gutes Tabakmaterial mit ausgeschleust. Dies erhöht unerwünschte Tabakverluste und führt zu zusätzlichen Kosten.
- Damit die Suche und Entfernung von Fremdkörpern bei den üblichen Massenströmen überhaupt Aussicht auf Erfolg hat, stehen die Fremdkörperdetektionsanlagen für Cigaretten vorzugsweise vor dem Prozessschritt des Schneidens des Tabaks. Nun ist aber nicht nur der Rohtabak mit Fremdkörpern belastet, sondern es besteht auch im Prozessablauf der Tabakaufbereitung die potentielle Gefahr, dass Fremdkörper in den Tabak gelangen können. Das heißt, es besteht trotz installierter Fremdkörpersuchanlagen die Gefahr, dass noch Fremdkörper bis zur Cigarettenmaschine gelangen können.
- Es gibt zwar an der Cigarettenmaschine eine funktionelle Einheit zur Abtrennung von Grobteilen wie z.B. kleinen unerwünschten Rippenstückchen, jedoch ist diese Einheit nicht in der Lage, mit ausreichendem Wirkungsgrad Fremdkörper zu entfernen, so dass die Gefahr besteht, dass letztlich Fremdkörper in die Cigarette gelangen können.

Eine **Aufgabe** der Erfindung ist es aber, ein gegenüber den bekannten Verfahren verbessertes Verfahren zum Ermitteln von Fremdkörpern im fertigen Tabakstrang zu schaffen, das an der Cigarettenmaschine einsetzbar ist und das keine radioaktive Strahlung erfordert. Dabei soll ein mit Fremdkörpern behafteter Teil eines Cigarettenstrangs ermittelt und direkt nach seiner Erkennung automatisch aus dem Produktionsprozess ausgestoßen werden.

Zur **Lösung** dieser Aufgabe dient das Verfahren der eingangs genannten Art, welches sich dadurch auszeichnet, dass das Dichtesignal $S_D$ und das Feuchtesignal $S_F$ zusammen kombiniert ausgewertet werden, um das Vorhandensein oder Fehlen von Fremdkörpern im Tabak zu erkennen.

Die vorliegende Erfindung bietet also eine Lösung zur Detektion von Fremdkörpern direkt in der Cigarettenmaschine an fertigen Cigaretten mit hoher Effizienz und unter Umgehung der oben beschriebenen Nachteile von Fremdkörpersuchanlagen im Bereich der Tabakaufbereitung.

Bei dem erfindungsgemäßen Verfahren zum Erkennen von Fremdkörpern in Cigaretten wird der gebildete Endlosstrang vor dem Schneiden in Einzelstränge im Bereich der Cigarettenmaschine einer Mikrowellenstrahlung ausgesetzt und es werden sowohl ein die Dichte des Stranges betreffendes Signal $S_D$ als auch ein die Feuchte des Stranges betreffendes Signal $S_F$ erzeugt; anschließend wird mittels einer Datenverarbeitung ein Kombinationssignal $S_K$ berechnet, welches signifikant und mit hoher Empfindlichkeit im Cigarettenstrang eventuell vorhandene Fremdkörper ausweist. Dabei versteht man unter Feuchte des Stranges den prozentualen Anteil von Wasser im Strang bezogen auf seine Trockenmasse.

Der vorliegenden Erfindung liegt folgende Idee zugrunde:

Es gibt seit einiger Zeit die Möglichkeit, die Tabakdichte eines Cigarettenstranges mit einer Mikrowellenmesseinheit zu ermitteln. Die Signale dieser Mikrowellenmesseinheit dienen als Grundlage zur Regelung des Cigarettengewichtes.

Das Meßverfahren beruht physikalisch auf der Auswertung der Dipol-Relaxation der Wassermoleküle in einer feuchten Materialprobe. Hierzu wird das Meßgut in das Feld eines Resonators gebracht. Befindet sich das zu messende Material im elektromagnetischen Feld des Resonators, wird die Resonanzfrequenz des Resonators gegenüber jener des leeren Resonators verkleinert, während die Halbwerts-Breite der Resonanzlinie gegenüber jener des leeren Resonators vergrößert wird. Diese beiden Effekte sind umso größer, je größer die Feuchte des Materials ist.

Auf beide messtechnisch erfassbaren Parameter, nämlich auf die Verringerung der Resonanzfrequenz und die Erhöhung der Halbwerts-breite, hat aber nicht nur die Material-Feuchte, sondern auch die Packungsdichte des Probenmaterials innerhalb des Feldbereiches des Resonators Einfluß. Damit eignet sich das Verfahren, gleichzeitig zwei Meßgrößen unabhängig voneinander zu messen, nämlich die Materialfeuchte unabhängig von der Packungsdichte, wenn mittels Referenzmessungen eine Feuchte-Kalibration durchgeführt wurde, sowie die Materialdichte unabhängig von der Materialfeuchte, wenn mittels Referenzmessungen eine Dichte-Kalibration durchgeführt wurde.

Bei der Dichtemessung eines Tabakstranges mittels des Mikrowellenresonanz-Meßprinzips fällt somit automatisch und quasi als Abfallprodukt ein Meßwert für die Materialfeuchte, ausgedrückt z.B. als "Prozent Wassergehalt (% $H_2O$)" an, welcher bisher nicht weiter genutzt wird.

Ein im Tabakstrang vorliegender Fremdkörper zeichnet sich nun dadurch aus, dass er sowohl eine vom restlichen Tabakstrang abweichende Dichte als auch Materialfeuchte hat. Erst durch die kombinierte Auswertung beider Signale Dichte und Feuchte ist man in der Lage, Fremdkörper mit hoher Empfindlichkeit und Präzision zu detektieren und in einem Folgeschritt die betreffende Cigarette ausschleusen zu können. Würde man nur die Dichte oder nur die Feuchte auswerten, käme man zu Fehlinterpretationen, da der normale Tabakstrang ohne Fremdkörper gewissen zufälligen und unregelmäßigen Dichte- und Feuchteschwankungen unterliegt.

Dieses Prinzip der Fremdkörperdetektion in Cigarettenmaschinen ist im Labor mittels eines handelsüblichen Mikrowellenmessgerätes zur Messung der Tabakdichte bzw. Tabakfeuchte erkannt und überprüft worden. Hierzu wurden Cigarettenstränge vermessen, die mit tabakfremden Teilchen per Hand dotiert wurden.

Die Erfindung betrifft ferner eine Vorrichtung zur Durchführung des Verfahrens, mit der solche Bereiche aus einem Tabakstrang entfernt werden können, die unerwünschte Fremdkörper enthalten. Die Vorrichtung basiert auf einem Mikrowellenresonator, wie er in der EP 0 889 321 A1 offenbart ist, nämlich mit einer oberen und unteren metallischen Wand, zwischen denen Keramikmaterial eingebracht ist. Durch die beiden metallischen Platten oder Wände und durch das keramische Material verläuft eine Durchgangsbohrung, durch die das zu untersuchende Material bewegt wird. Die vom Mikrowellenresonator erzeugten Signale werden einer Auswerteschaltung zugeleitet, die beim Vorliegen vorgegebener Kriterien einen Ejektor ansteuert, um einen vorgegebenen Abschnitt aus dem Tabakstrang auszuschleusen. In der Regel wird der Ejektor im Abstand zum Mikrowellenresonator an der Cigarettenmaschine montiert sein, so daß eine zeitliche Abstimmung zwischen dem Mikrowellenresonator und dem Ejektor erfolgen muß. Nun stellt es für den Fachmann keine Schwierigkeiten dar, wie diese zeitliche Abstimmung vorzunehmen wäre. Ein Beispiel besteht darin, daß mit dem Hauptantrieb der Cigarettenmaschine ein Encoder gekoppelt ist, der Signale erzeugt, die der Arbeitsdrehzahl der Cigarettenmaschine eindeutig zugeordnet sind. In einer Ausführungsform ist dies eine rotierende Scheibe, die mit dem Hauptantrieb der Cigarettenmaschine starr gekoppelt ist, so daß sie sich stets mit der gleichen Drehzahl wie die Hauptwelle der Cigarettenmaschine dreht. Es ist natürlich auch möglich, die Scheibe mit einer geringeren oder höheren Drehzahl wie die Drehzahl der Hauptwelle der Cigarettenmaschine drehen zu lassen, wobei es nur darauf ankommt, daß sich das Übersetzungsverhältnis nicht ändert. Wenn die rotierende Scheibe am Umfang in regelmäßigem Abstand mit Löchern oder Schlitzen versehen ist, beispielsweise mit 360 Löchern oder Schlitzen, so kann ein Lichtstrahl, der von einer Seite der Scheibe zur anderen auf eine Photozelle gerichtet wird, je Umdrehung der Scheibe 360 Impulse erzeugen, von denen jeder Impuls 1° Drehbewegung repräsentiert. Diese elektrischen Impulse werden in einer elektronischen Schaltung verarbeitet und dienen dazu, den Ejektor in zeitlicher Zuordnung zum Mikrowellenresonator anzusteuern. Es stellt nämlich für den Fachmann keine Schwierigkeiten dar, zu ermitteln, wieviele Impulse gezählt werden müssen, ehe eine Ansteuerung des Ejektors erfolgen soll. Die Zahl der Encoderimpulse "n", die erforderlich sind, bis das Ausschleussignal zu erfolgen hat, hängt von verschiedenen Einflußfaktoren an der Cigarettenmaschine ab, beispielsweise der Position des Meßsensors, dem Format der Cigarette oder Konstruktionsmerkmale der Filteransetzmaschine.

Der Ejektor kann unterschiedliche Bauweise haben, beispielsweise eine einfache Druckluftdüse, die beim Eintreffen eines Ansteuerungsbefehls einen starken Druckluftstrahl freigibt, der seitlich gegen den Tabakstrang gerichtet ist und jeweils beim Eintreffen eines Ansteuerungsbefehls einen bestimmten.Bereich aus dem Tabakstrang herausbläst.

In einer anderen Ausführungsform ist der Ejektor hinter dem Messerapparat an der Cigarettenmaschine angeordnet, nämlich an einer Stelle, an der bereits fertige Cigaretten vorliegen. Bei dieser Anordnung werden ganze Cigaretten ausgeschleust und gesammelt, um gegebenenfalls einer Tabakaufbereitung zugeführt zu werden.

Die Erfindung wird nachfolgend an Hand von Diagrammen näher erläutert; es zeigen:

**Figur 1**     den Kurvenverlauf für die Dichte und Feuchte einer normalen Cigarette;
**Figur 2**     den Kurvenverlauf gemäß Figur 1 mit einem Holzteil als Fremdkörper;
**Figur 3**     den Kurvenverlauf gemäß Figur 1 mit einem Hartplastikteil als Fremdkörper;
**Figur 4**     den Kurvenverlauf gemäß Figur 1 mit einem Gummiteil als Fremdkörper;
**Figur 5**     den Kurvenverlauf gemäß Figur 1 mit einem Glasstück als Fremdkörper;
**Figur 6**     den Kurvenverlauf gemäß Figur 1 mit einem Metallteil als Fremdkörper;
**Figur 7**     den Kurvenverlauf gemäß Figur 1 mit einem Stein als Fremdkörper.
**Figur 8**     den Datenverlauf für das Kombinationssignal einer normalen Cigarette;
**Figur 9**     den Datenverlauf gemäß Figur 8 mit einem Holzteil als Fremdkörper;
**Figur 10**    den Datenverlauf gemäß Figur 8 mit einem Hartplastikteil als Fremdkörper;
**Figur 11**    den Datenverlauf gemäß Figur 8 mit einem Gummiteil als Fremdkörper;
**Figur 12**    den Datenverlauf gemäß Figur 8 mit einem Glasstück als Fremdkörper;
**Figur 13**    den Datenverlauf gemäß Figur 8 mit einem Metallteil als Fremdkörper; und
**Figur 14**    den Datenverlauf gemäß Figur 8 mit einem Stein als Fremdkörper.

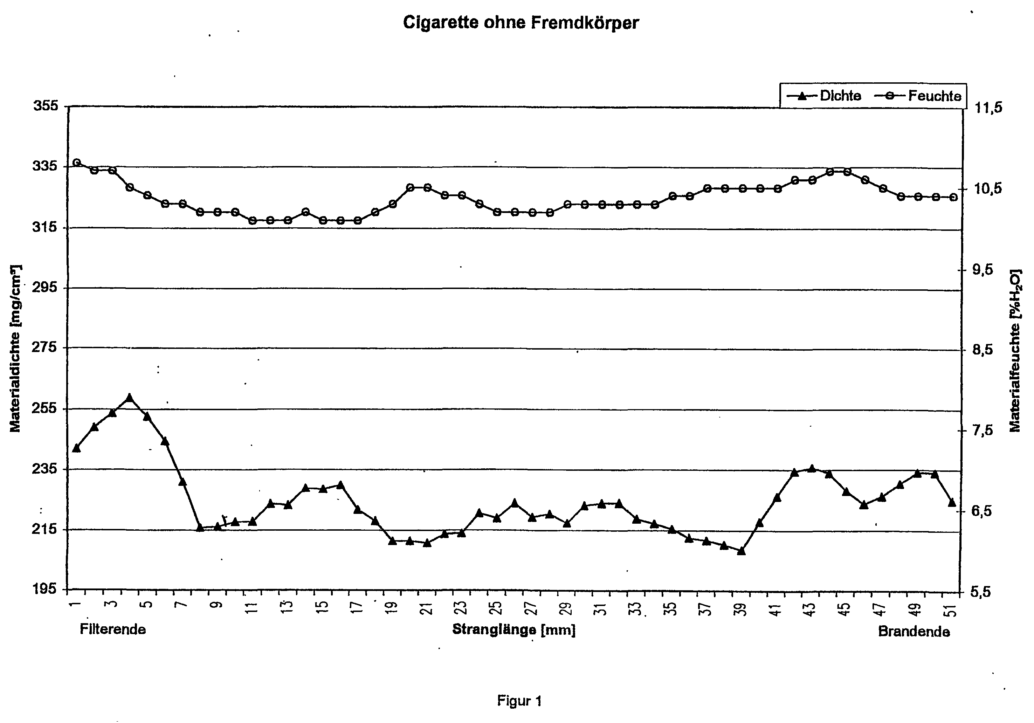

**Figur 1** zeigt die Meßpunkte für die Dichte und Feuchte eines normalen Tabakstrangs. Die Messungen erfolgten im Abstand von 1mm und sind übereinander aufgetragen. Die obere Kurve zeigt eine Feuchteverteilung für eine normale Cigarette, die zwischen 10,0 und 10,5% Wasser liegt. Über den gleichen Meßbereich schwankt die Dichte für eine normale Cigarette zwischen 205 und 255mg/cm$^3$, wobei der Mittelwert bei etwa 220mg/cm$^3$ lag.

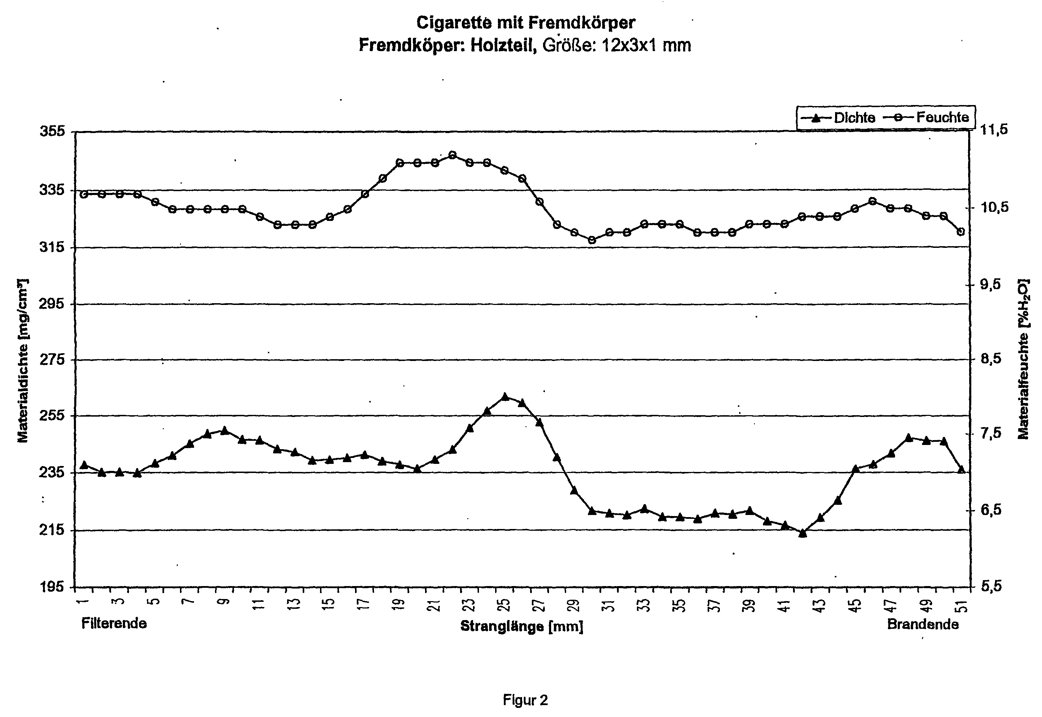

Befand sich nun gemäß **Figur 2** ein Holzteil im Tabakstrang, so änderten sich sowohl die Dichte, als auch die Feuchte in diesem Bereich, was bereits zu deutlichen Peaks im Bereich von 18 bis 28mm führte.

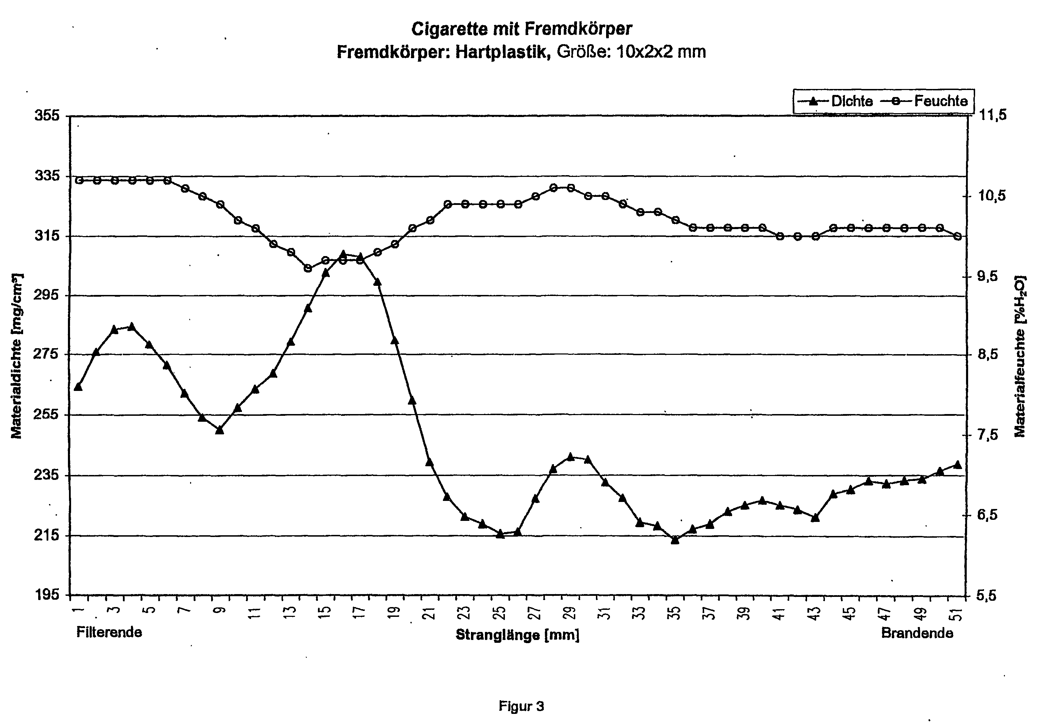

**Figur 3** zeigt den Meßkurvenverlauf für ein Hartplastikteil, das einen deutlichen Dichte-Peak im Bereich von 12 bis 20mm und einen entsprechenden Feuchte-Peak zwischen 12 und 20mm zeigte.

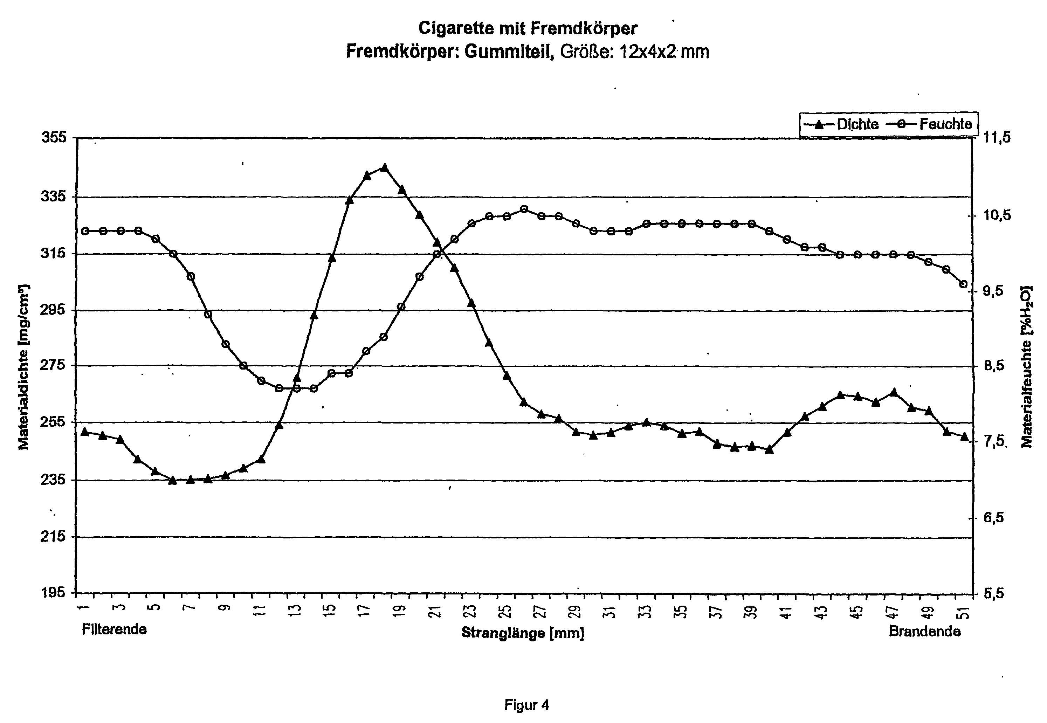

**Figur 4** zeigt den Kurvenverlauf für ein Gummiteil als Fremdkörper, das deutliche Peaks zwischen 8 und 25mm zur Folge hatte.

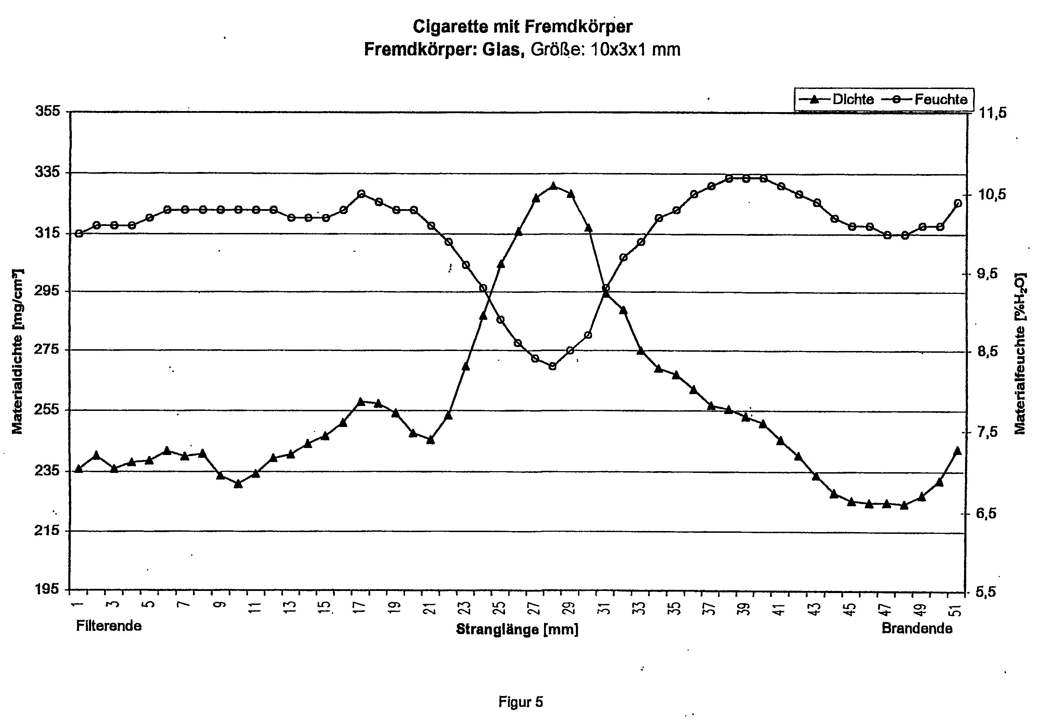

**Figur 5** zeigt den Meßverlauf an einem Tabakstrang mit einem Glasteil als Fremdkörper. Sowohl die Dichte- als auch die Feuchte-Kurve zeigen deutliche Peaks im Bereich von 22-33mm, die auf das Vorhandensein dieses Fremdkörpers schließen lassen.

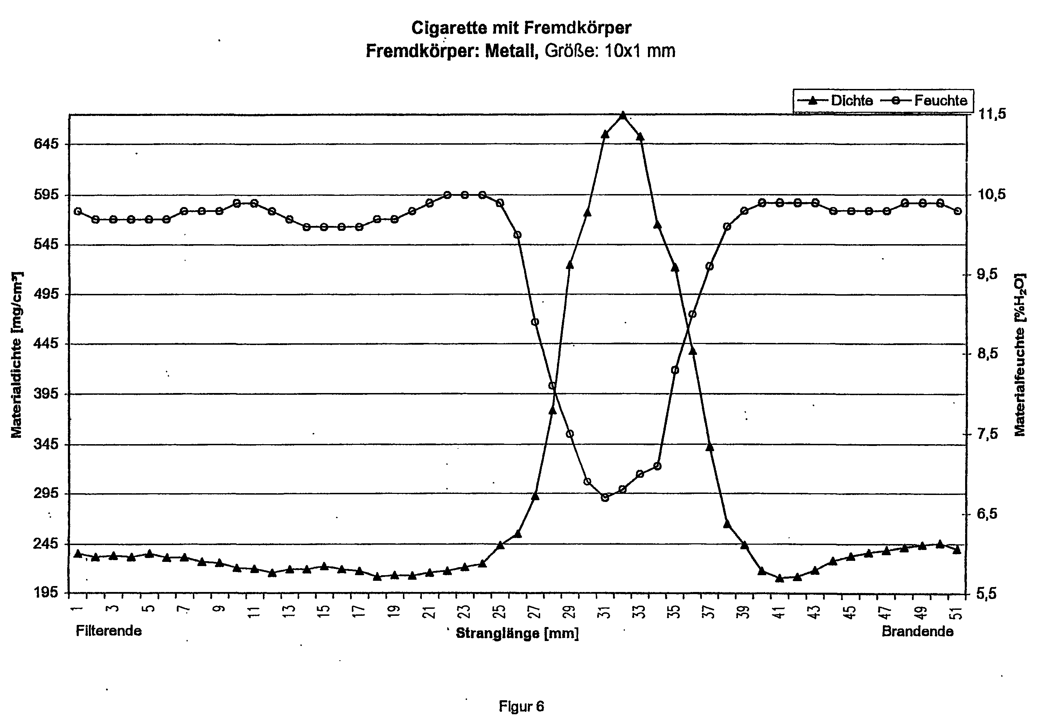

**Figur 6** zeigt den Kurvenverlauf für ein Metallteil als Fremdkörper mit noch deutlicheren Peaks im Bereich von 27 bis 38mm.

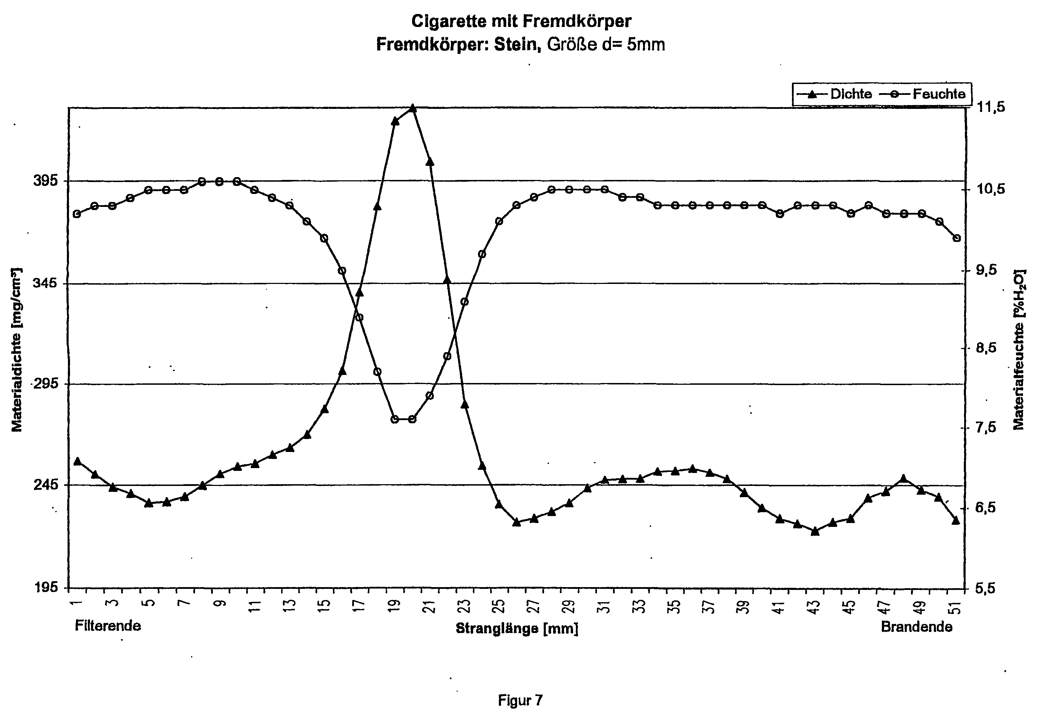

Ebenso deutliche Peaks verursacht ein Stein als Fremdkörper im Tabakstrang, der im Bereich von 15 bis 25 mm erkannt worden ist, was aus **Figur 7** deutlich entnehmbar ist.

Aus den zeitgleich und parallel gewonnenen Meßwerten für die Strangdichte $S_D$ und die Strangfeuchte $S_F$ wird mittels einer Datenverarbeitung ein Kombinationssignal $S_K$ zum Beispiel nach folgender Formel berechnet:

$$S_K = ABS(\text{Modalwert x - Meßwert } x_i)^n_{\text{Dichte}} * ABS (\text{Modalwert x -}$$

$$\text{Meßwert } x_i)^n_{\text{Feuchte}}$$

Das Kombinationssignal $S_K$ ist das Produkt aus dem Betrag der Differenz des Modalwertes minus dem i-ten Meßwert des Dichtesignals und dem Betrag der n-ten Potenz der Differenz des Modalwertes minus dem i-ten Meßwert des Feuchtesignals und weist signifikant und mit hoher Empfindlichkeit Fremdkörper im Cigarettenstrang aus. Die Variable n kann einen Wert von 1 bis 5 annehmen.

Weitere Möglichkeiten der Berechnung des Kombinationssignals $S_K$ ergeben sich nach den Formeln:

$$S_K = (\text{Modalwert x - Meßwert } x_i)^n{}_{Dichte} * ABS(\text{Modalwert x - Meßwert } x_i)^n{}_{Feuchte}$$

oder

$$S_K = ABS (\text{Modalwert x - Meßwert } x_i)^n{}_{Dichte} * (\text{Modalwert x - Meßwert } x_i)^n{}_{Feuchte}$$

oder

$$S_K = (\text{Modalwert x - Meßwert } x_i)^n{}_{Dichte} * (\text{Modalwert x - Meßwert } x_i)^n{}_{Feuchte}$$

Das Kombinationssignal $S_K$ wird nachfolgend an Hand von Diagrammen näher erläutert. Basis für diese Diagramme sind die primär erhaltenen Meßsignale gemäß Figur 1 - Figur 7.

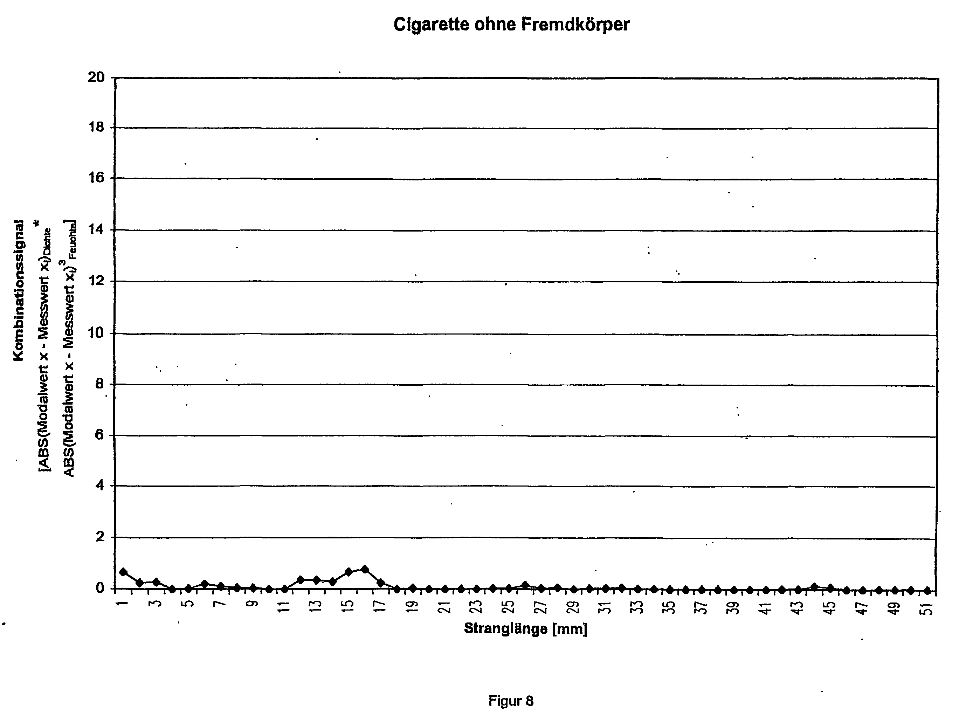

**Figur 8** zeigt die Datenpunkte für das Kombinationssignal eines normalen Tabakstrangs. Es traten Intensitäten abweichend von der Nulllinie bis maximal zum Wert 1 auf.

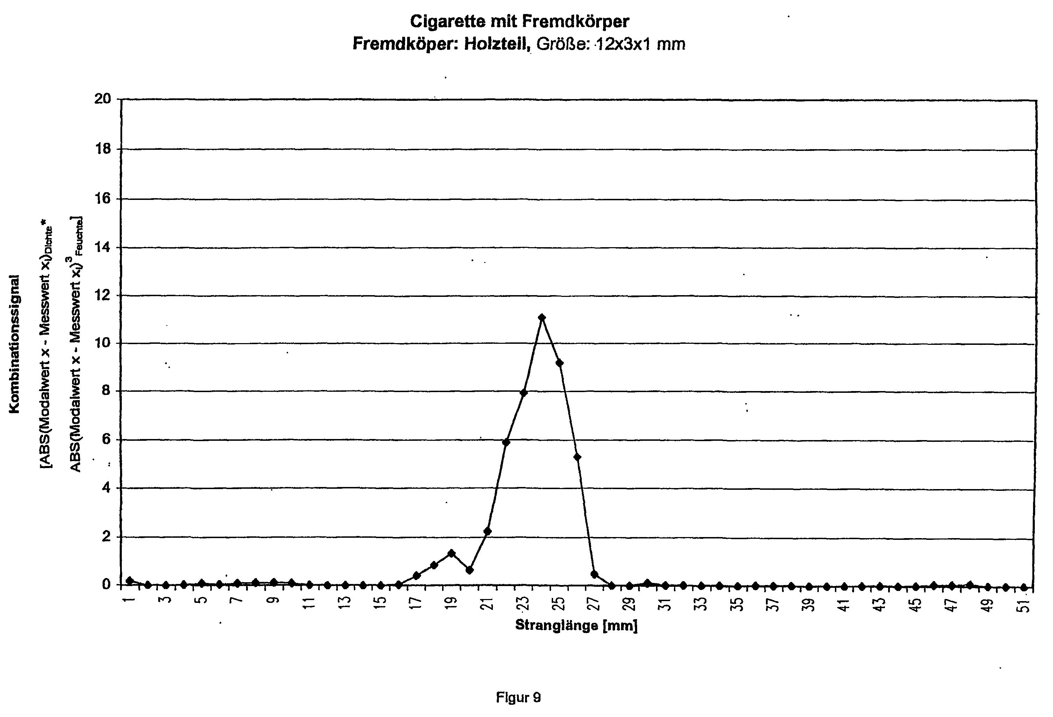

Befand sich nun gemäß **Figur 9** ein Holzteil im Tabakstrang, so zeigte sich im Bereich 22 bis 26mm ein signifikanter Peak bis zu einer maximalen Intensität des Wertes 11.

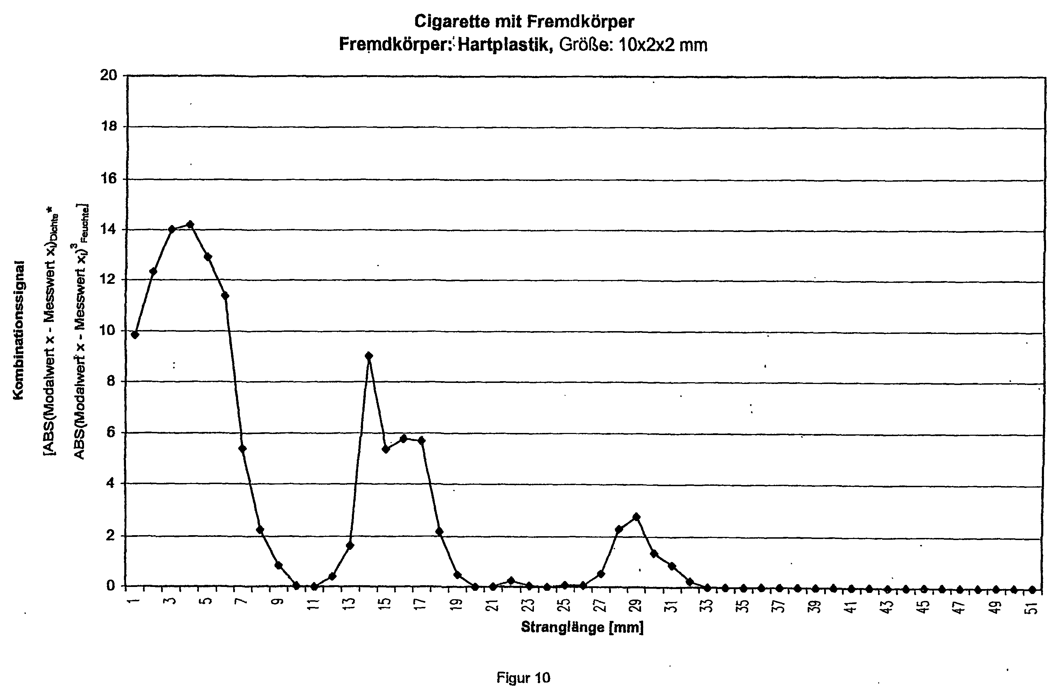

**Figur 10** zeigt den Datenverlauf für ein Hartplastikteil, das einen Kombinationssignal-Peak im Bereich von 14 bis 18mm bis zu einer maximalen Intensität des Wertes 9 zeigte.

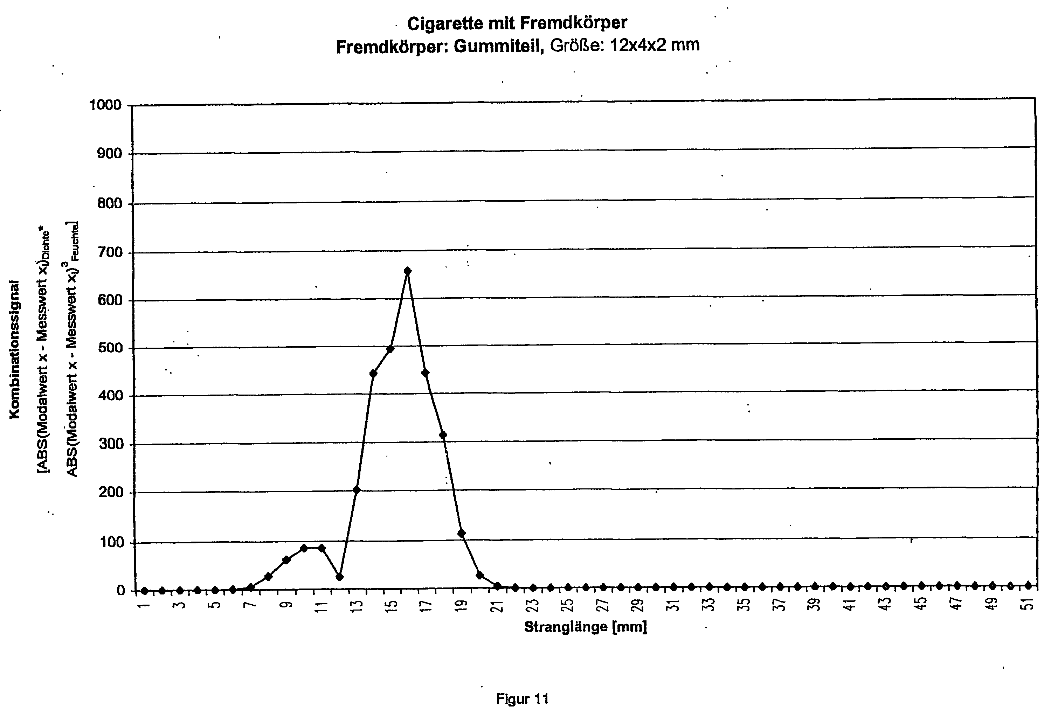

**Figur 11** zeigt den Datenverlauf für ein Gummiteil als Fremdkörper, das einen deutlichen Peak zwischen 14 und 18mm bis zur einer maximalen Intensität des Wertes 650 zur Folge hatte.

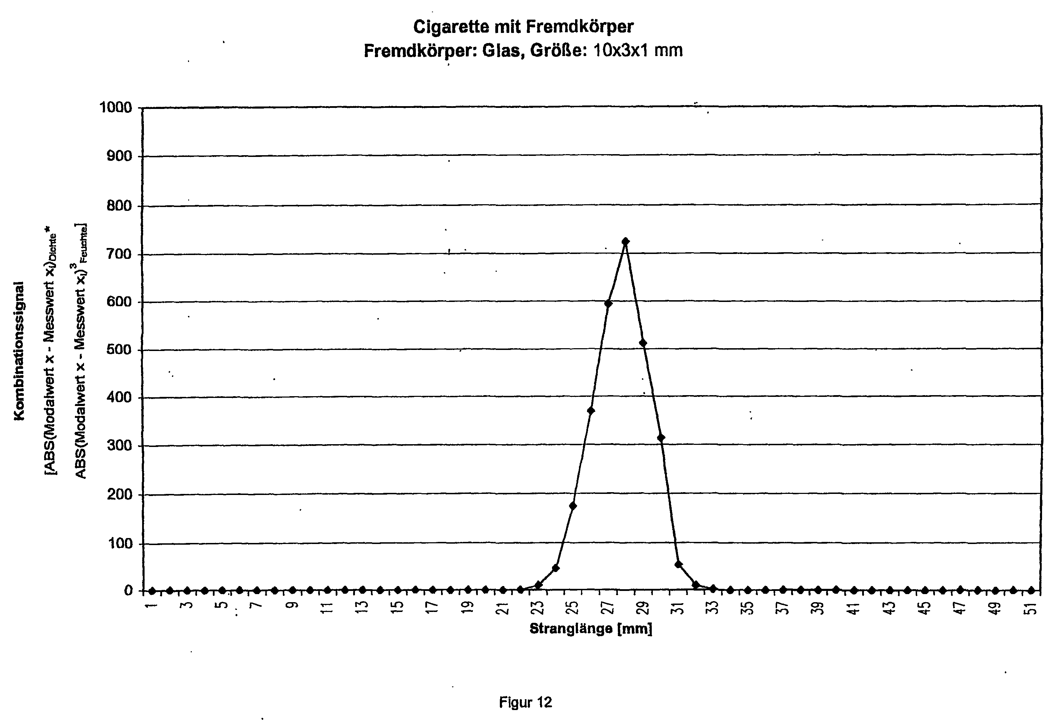

**Figur 12** zeigt den Datenverlauf an einem Tabakstrang mit einem Glasteil als Fremdkörper. Es zeigt sich ein deutlicher Peak im Bereich von 25 bis 30mm bis zu einer maximalen Intensität des Wertes 700, der auf das Vorhandensein dieses Fremdkörpers schließen lässt.

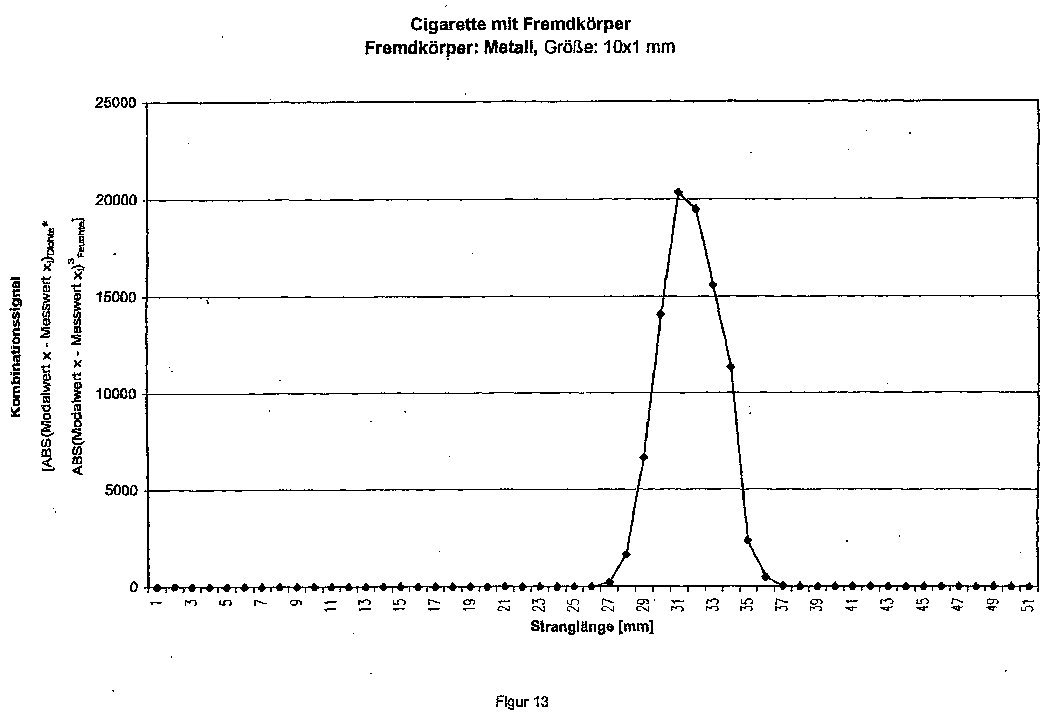

**Figur 13** zeigt den Datenverlauf für ein Metallteil als Fremdkörper mit einem noch deutlicheren Peak bis zu einer maximalen Intensität des Wertes 20000 im Bereich von 29 bis 34mm.

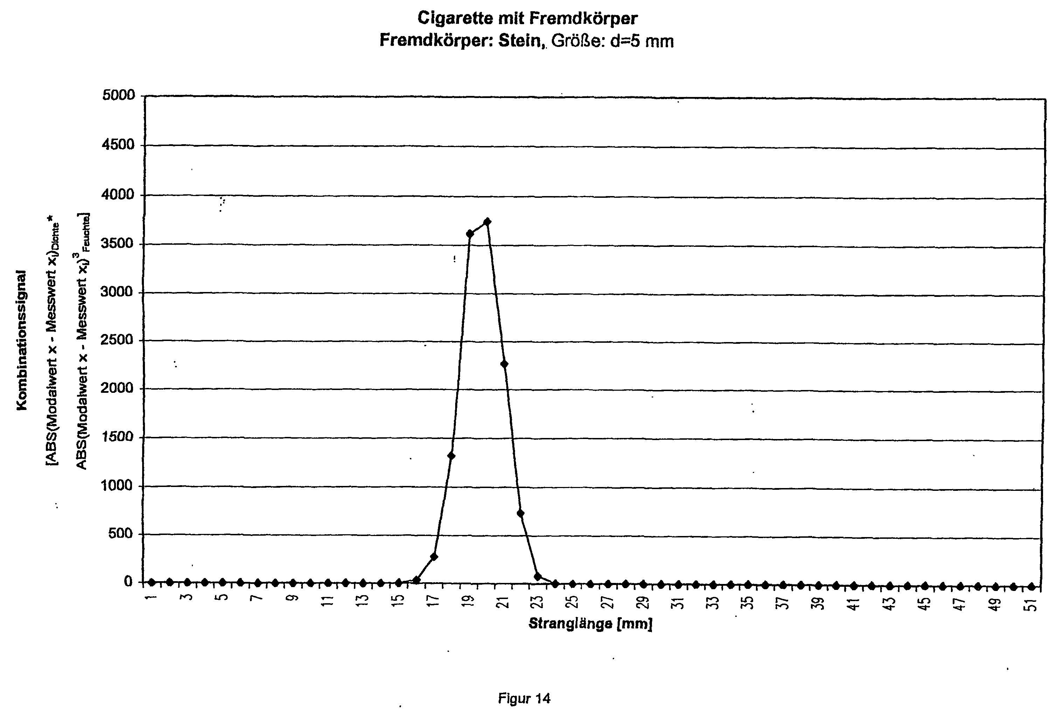

Einen ebenfalls deutlichen Peak bis zu einer maximalen Intensität des Wertes 3500 verursacht ein Stein als Fremdkörper im Tabakstrang, der im Bereich von 18 bis 22 mm erkannt worden ist, was aus **Figur 14** deutlich entnehmbar ist.

Wenn das Kombinationssignal einen festzulegenden Schwellenwert z.B. den Wert 5 übersteigt, wird ein Fremdkörpersignal erzeugt, das zum Ansteuern eines Ejektors herangezogen wird. Auf diese Weise kann gewährleistet werden, dass mit Fremdkörpern behaftete Cigarettenstränge aus dem Produktionsprozess eliminiert und einer getrennten Entsorgung zugeführt werden.

Die Erfindung kann ebenso für andere strangförmige, fortlaufende oder portionierte Schüttgut-Einheiten eingesetzt werden.

## Patentansprüche

1. Verfahren zum Detektieren und Selektieren von Fremdkörpern in Cigaretten, bei dem der Tabak im Bereich der Cigarettenmaschine einer Mikrowellenstrahlung ausgesetzt und sowohl ein die Dichte des Tabaks betreffendes Signal $S_D$ als auch ein die Feuchte des Tabaks betreffendes Signal $S_F$ erzeugt werden, **dadurch gekennzeichnet, dass** das Dichtesignal $S_D$ und das Feuchtesignal $S_F$ zusammen kombiniert ausgewertet werden, um das Vorhandensein oder Fehlen von Fremdkörpern im Tabak zu erkennen.

2. Verfahren nach Anspruch 1, **dadurch gekennzeichnet, dass** aus den zeitgleich gewonnenen Meßwerten für das Dichtesignal $S_D$ und das Feuchtesignal $S_F$ mittels einer Datenverarbeitung ein Kombinationssignal $S_K$ berechnet wird.

**3.** Verfahren nach Anspruch 1, **dadurch gekennzeichnet, dass** dann, wenn das Kombinationssignal $S_K$ einen einstellbaren Schwellenwert überschreitet, ein Fremdkörpersignal erzeugt wird, das dazu verwendet wird, eine Ausstoßvorrichtung zum Ausstoßen von Fremdkörpern anzusteuern.

**4.** Vorrichtung zur Durchführung des Verfahrens nach einem der Ansprüche 1 bis 3, mit einem Mikrowellenresonator mit einem Resonanzhohlraum, in dem ein Dielektrikum angeordnet ist, das einen Hohlraum aufweist, durch den der Tabakstrang kontinuierlich durchleitbar ist, und mit mindestens einer Mikrowellenantenne mit angeschlossener Elektrode zur Aussendung von HF-Strahlung in und durch den Resonanzhohlraum, **dadurch gekennzeichnet, daß** der Mikrowellenresonator mit einem Ejektor gekoppelt ist und diesen in der Art ansteuert, daß nach dem Erkennen eines Fremdkörpers der Ejektor angesteuert wird und den mit dem Fremdkörper verunreinigten Tabakstrangabschnitt aus dem Tabakstrang ausschleust.

**5.** Vorrichtung nach Anspruch 4, **dadurch gekennzeichnet, daß** eine elektronische oder elektromechanische Steuerung die Signale des Mikrowellenresonators verarbeitet und daraus Ansteuerungssignale für den Ejektor erzeugt.

## Claims

**1.** Method for detecting and selecting foreign elements in cigarettes, in which the tobacco is exposed in the region of the cigarette machine to microwave radiation and both a signal $S_D$ relating to the tobacco density and a signal $S_F$ relating to the tobacco moisture are generated, **characterised in that** the density signal $S_D$ and the moisture signal $S_F$ are evaluated in combination with one another in order to detect the presence or absence of foreign elements in the tobacco.

**2.** Method according to claim 1, **characterised in that** a combination signal $S_K$ is calculated by data processing from the simultaneously obtained measured values for the density signal $S_D$ and the moisture signal $S_F$.

**3.** Method according to claim 1, **characterised in that** if the combination signal $S_K$ exceeds an adjustable threshold, a foreign element signal is generated and used for activating an ejector for ejecting foreign elements.

**4.** Device for carrying out the method according to any one of claims 1 to 3, comprising a microwave resonator having a resonating cavity in which a dielectric, which has a cavity through which the tobacco strand may be continuously fed, is arranged, and comprising at least one microwave antenna having an electrode connected thereto for emitting radio frequency radiation into and through the resonating cavity, **characterised in that** the microwave resonator is coupled to an ejector and activates said ejector such that once a foreign element has been recognised, the ejector is activated and ejects from the tobacco strand the portion of the tobacco strand that is contaminated by the foreign element.

**5.** Device according to claim 4, **characterised in that** an electronic or electromechanic control system processes the signals from the microwave resonator and generates therefrom signals for activating the ejector.

## Revendications

**1.** Procédé pour la détection et la sélection de corps étrangers dans des cigarettes, pour lequel le tabac est soumis dans la zone de la machine à cigarettes à un rayonnement de micro-ondes et pour lequel sont engendrés aussi bien un signal $S_D$ concernant la densité du tabac qu'un signal $S_F$ concernant l'humidité du tabac, **caractérisé en ce que** le signal de densité $S_D$ et le signal d'humidité $S_F$ sont exploités combinés ensemble pour reconnaître la présence ou l'absence de corps étrangers dans le tabac.

**2.** Procédé selon la revendication 1, **caractérisé en ce qu'**à partir des valeurs de mesure obtenues simultanément pour le signal de densité $S_D$ et pour le signal d'humidité $S_F$, un signal combiné $S_K$ est calculé au moyen d'un traitement de données.

**3.** Procédé selon la revendication 1, **caractérisé en ce que** quand le signal combiné $S_K$ dépasse une valeur de seuil réglable, un signal de corps étranger est engendré, lequel est utilisé pour exciter un dispositif d'éjection pour éjecter des corps étrangers.

4. Dispositif pour l'exécution du procédé selon l'une des revendications 1 à 3, avec un résonateur à micro-ondes avec une cavité de résonance dans laquelle est disposé un diélectrique qui comporte une cavité à travers laquelle on peut faire passer le boudin de tabac en continu, et avec au moins une antenne à micro-ondes avec une électrode connectée pour l'émission de rayonnement HF dans et à travers la cavité, **caractérisé en ce que** le résonateur à micro-ondes est couplé à un éjecteur et excite ce dernier de telle sorte qu'après la reconnaissance d'un corps étranger, l'éjecteur est excité et écarte du boudin de tabac le tronçon de boudin de tabac souillé par le corps étranger.

5. Dispositif selon la revendication 4, **caractérisé en ce qu'**une commande électronique ou électromécanique traite les signaux du résonateur à micro-ondes et engendre à partir d'eux les signaux d'excitation pour l'éjecteur.

**Cigarette ohne Fremdkörper**

Figur 1

EP 1 304 933 B1

**Cigarette mit Fremdkörper**
**Fremdköper: Holzteil**, Größe: 12x3x1 mm

Figur 2

EP 1 304 933 B1

Figur 3

Cigarette mit Fremdkörper
Fremdkörper: Gummiteil, Größe: 12x4x2 mm

Figur 4

**Cigarette mit Fremdkörper**
**Fremdkörper: Glas, Größe: 10x3x1 mm**

Figur 5

EP 1 304 933 B1

Cigarette mit Fremdkörper
Fremdkörper: Metall, Größe: 10x1 mm

Figur 6

13

Figur 7

**Cigarette ohne Fremdkörper**

Kombinationssignal

$$[ABS(Modalwert\ x_i)_{Dichte}]^*$$
$$[ABS(Modalwert\ x_i - Messwert\ x_i)^3_{Feuchte}]$$

Stranglänge [mm]

Figur 8

Cigarette mit Fremdkörper
Fremdköper: Holzteil, Größe: 12x3x1 mm

Figur 9

EP 1 304 933 B1

Cigarette mit Fremdkörper
Fremdkörper: Hartplastik, Größe: 10x2x2 mm

Figur 10

**Cigarette mit Fremdkörper**
**Fremdkörper: Gummiteil, Größe: 12x4x2 mm**

Figur 11

EP 1 304 933 B1

Cigarette mit Fremdkörper
Fremdkörper: Glas, Größe: 10x3x1 mm

Figur 12

Cigarette mit Fremdkörper
Fremdkörper: Metall, Größe: 10x1 mm

Kombinationssignal

$[ABS(Modalwert \, x - Messwert \, x_i)_{Dichte}$ *

$ABS(Modalwert \, x - Messwert \, x_i)^3_{Feuchte}]$

Stranglänge [mm]

Figur 13

Cigarette mit Fremdkörper
Fremdkörper: Stein, Größe: d=5 mm

Figur 14